# EUROPÄISCHE PATENTSCHRIFT

(11) **EP 2 646 258 B1**
(45) Veröffentlichungstag und Bekanntmachung des Hinweises auf die Patenterteilung: **09.07.2014**
(21) Anmeldenummer: 11794100.5
(22) Anmeldetag: 05.12.2011
(51) Int. Cl.: B60B 17/00

(54) **SCHIENENRAD**
TRACK WHEEL
ROUE DE VÉHICULE FERROVIAIRE

(30) Priorität: 03.12.2010 DE 102010053218
(43) Veröffentlichungstag der Anmeldung: 09.10.2013
(73) Patentinhaber: Bochumer Verein Verkehrstechnik GmbH, 44793 Bochum (DE)
(72) Erfinder: KÖHLER, Günter, 31139 Hildesheim (DE)
(74) Vertreter: Cohausz & Florack
(86) Internationale Anmeldenummer: PCT/EP2011/071758
(87) Internationale Veröffentlichungsnummer: WO 2012/072817

(56) Entgegenhaltungen:
- WO-A2-2008/012855
- DE-A1-102009 037 936
- DE-C1- 19 580 284
- DE-U1- 8 424 104

## Beschreibung

Die Erfindung betrifft ein Schienenrad mit einem Radkörper, der eine Radscheibe, eine zentral in der Radscheibe angeordneten Radnabe und einen von der Radscheibe getragenen Radkranz umfasst, und mit einer an dem Schienenrad befestigten, zur Dämpfung von durch die Abrollbewegung des Schienenrades im Fahrbetrieb entstehenden Schallemissionen vorgesehenen Radabdeckung, die die Radscheibe des Radkörpers an mindestens einer ihrer Stirnseiten zumindest abschnittsweise gegenüber der Umgebung abdeckt und dabei einerseits an einem der Radnabe zugeordneten inneren Bereich des Radkörpers und anderseits an einem dem Radkranz zugeordneten äußeren Randbereich des Radkörpers abgestützt ist.

Schienenräder dieser Art werden an Schienenfahrzeugen, insbesondere Waggons für den Personen- oder Lastentransport, eingesetzt. Dabei rollt das Schienenrad mit der äußeren Umfangsfläche seines Radkranzes auf der Schiene ab. Durch die im Kontaktbereich Rad/Schiene wirkenden Wechselkräfte werden dabei Resonanzfrequenzen angeregt. So schwingt der Radkranz in radialer und axialer Richtung, während gleichzeitig die Radscheibe wie die Membran eines konventionellen Lautsprechers in axialer Richtung schwingt. Die Membranschwingungen wirken sich in der Intensität der Schallabstrahlung besonders stark aus. Zur Reduzierung der Schallabstrahlung eines Schienenrades ist es bekannt, an der Unterseite des Radkranzes Absorber, insbesondere Resonanzabsorber, anzubringen und die Form des Schienenrades so zu wählen, dass aus der Kombination aus Formgebung und geeignet angekoppelten Schwingungsabsorbern dafür gesorgt ist, dass einerseits die axialen Membranschwingungen der Radscheibe weitgehend unterdrückt und andererseits die Radialschwingungen des Radkranzes gedämpft werden (EP 0 898 515 B1).

Aus der gattungsbildenden WO 2008/012855 ist darüber hinaus eine mehrteilige Radabdeckung für Schienenfahrzeugräder bekannt, bei der eine Absorption von Schallemissionen durch die zwischen zwei aufeinander liegenden Metallscheiben herrschende Reibung bewirkt werden soll, die die Radscheibe auf ihrer einen Seite gegenüber der Umgebung abdecken. Die beiden Scheiben weisen dabei jeweils eine zentrale Öffnung auf, durch die die Radnabe des Schienenrades greift. Die eine Metallscheibe ist dabei im Bereich ihres äußeren, dem Radkranz zugeordneten Rands an einem Ring befestigt, der in einer in die Innenumfangsfläche des Radkranzes eingeformten Nut sitzt. Ausgehend von ihrer zentralen Öffnung sind dabei in regelmäßigen Abständen angeordnete, in radialer Richtung weisende Schlitze in diese erste Metallscheibe eingeschnitten. Die andere Metallscheibe ist dagegen im Bereich ihres inneren, ihre zentrale Öffnung begrenzenden, der Radnabe zugeordneten Randes an einem weiteren Ring befestigt, der in einer in die Außenumfangsfläche der Radnabe eingeformten Nut sitzt. Ausgehend von ihrem dem Radkranz zugeordneten äußeren Rand sind auch in die zweite Metallscheibe in radialer Richtung weisende Schlitze eingeschnitten, die in denselben regelmäßigen Winkelabständen angeordnet sind wie die Schlitze der ersten Metallscheibe, so dass bei fertig montierten Metallscheiben Kühlluft durch die in Deckung ausgerichteten Schlitze treten kann. Dabei sind die Metallscheiben so montiert, dass sie mit ihren einander zugeordneten Oberflächen dicht aneinander anliegen. Im Fahrbetrieb sollen die Metallscheiben sich angeregt durch die dabei entstehenden Schwingungen relativ zueinander bewegen, so dass durch die zwischen Ihnen herrschende Reibung die betreffenden Schwingungen gedämpft werden.

Abgesehen davon, dass es schwierig ist, mit den voranstehend erläuterten Schwingungsdämpfungssystemen für Schienenräder die an die Minimierung der Schallemissionen gestellten immer strenger werdenden Anforderungen zu erfüllen, sind sie umständlich zu montieren und aufgrund der hohen Anzahl von Bauteilen nur zu vergleichbar hohen Kosten zu realisieren.

Vor diesem Hintergrund bestand die Aufgabe der Erfindung darin, ein Schienenrad zu schaffen, bei dem auf einfache und kostengünstige Weise eine optimierte Schalldämpfung bewirkt ist.

Diese Aufgabe ist durch ein Schienenrad gelöst worden, das erfindungsgemäß die in Anspruch 1 angegebenen Merkmale aufweist.

In Übereinstimmung mit dem eingangs angegebenen Stand der Technik weist ein erfindungsgemäßes Schienenrad somit einen Radkörper auf, der eine Radscheibe, eine zentral in der Radscheibe angeordnete Radnabe und einen von der Radscheibe getragenen Radkranz umfasst. Der Radkörper kann dabei einstückig ausgebildet sein oder im Sinne eines gebauten Schienenrades aus getrennt voneinander vorgefertigten Teilen zusammengesetzt sein.

An einem erfindungsgemäßen Schienenrad ist eine Radabdeckung befestigt, die zur Dämpfung von durch die Abrollbewegung des Schienenrades im Fahrbetrieb entstehenden Schallemissionen dient und die Radscheibe des Radkörpers an mindestens einer ihrer Stirnseiten zumindest abschnittsweise gegenüber der Umgebung abdeckt. Dabei ist die Radabdeckung einerseits an einem der Radnabe zugeordneten inneren Bereich des Schienenkörpers und anderseits an einem dem Radkranz zugeordneten äußeren Randbereich des Radkörpers abgestützt.

Erfindungsgemäß ist die Radabdeckung nun so montiert, dass sie im Bereich ihres dem Radkranz und/oder der Radnabe des Radkörpers zugeordneten Rands eine federnd elastische Druckkraft gegen den Radkörper ausübt.

Durch die federnd elastische Abstützung der Radabdeckung auf oder an dem Radkörper ist die Montage der bei einem erfindungsgemäßen Schienenrad vorhandenen Radabdeckung gegenüber der Montage der zur Schalldämpfung bei den eingangs diskutierten bekannten Schienenrädern vorgesehenen Dämpfungseinrichtungen deutlich vereinfacht. So lässt sich die Radabdeckung erfindungsgemäß beispielsweise so montieren, dass sie in einem bestimmten Abschnitt durch ein geeignetes Spannelement fest am Radkörper gehalten ist, während sie mit einem anderen Abschnitt federnd elastisch gegen den Radkörper abgestützt ist. Voraussetzung dazu ist lediglich eine geeignete Formgebung oder Ausrichtung der Radabdeckung.

So ergibt sich beispielsweise eine auch nachträglich besonders einfach montierbare Ausgestaltung der Erfindung dann, wenn bei einem Schienenrad die Radabdeckung in ihrem der Radnabe zugeordneten Bereich fest mit dem Radkörper verbunden ist, während sie mit ihrem äußeren Rand federnd elastisch auf den Schienenkörper wirkt. Genauso kann es aber auch zweckmäßig sein, die Radabdeckung in einem mittleren Bereich ihrer Radialerstreckung gegen den Radkörper zu verspannen, so dass sie sowohl an ihrem äußeren, dem Radkranz zugeordneten Randbereich als auch an ihrem inneren, der Radnabe zugeordneten Bereich federnd elastisch an dem Radkörper abgestützt ist. Hierzu können beispielsweise an der Radabdeckung in den jeweiligen Bereichen der Radabdeckung Federabschnitte ausgebildet sein, die im fertig montierten Zustand entsprechend vorgespannt mit ihren freien Enden jeweils auf dem Radkörper stehen.

Der entscheidende Vorteil der federnd elastischen Abstützung der Radabdeckung auf dem Radkörper besteht darin, dass durch den federnden nachgiebigen Kontakt zwischen Radabdeckung und Radkörper das Schwingungsverhalten des Radkörpers effektiv verändert wird. Infolge der nach Art eines Gegenschwingers wirkenden Radabdeckung ist die Intensität der von einem erfindungsgemäßen Schienenrad ausgehenden Schallemission gegenüber konventionellen Schienenrädern im Fahrbetrieb deutlich herabgesetzt, ohne dass es dazu aufwändiger oder vieler Bauteile bedarf. Stattdessen reicht bei einer erfindungsgemäßen Anordnung der Radabdeckung an einem Schienenrad eine minimierte Bauteilzahl aus, um die Schallabstrahlung wirkungsvoll zu minimieren.

Besonders effektiv und einfach lässt sich dies dann bewerkstelligen, wenn die Radabdeckung nach Art einer Tellerfeder ausgebildet ist. Die Radabdeckung weist dann eine ringförmige, kegelige Grundform auf und wirkt als solche als in Achsrichtung belastbares Federelement. Die Krafteinleitung erfolgt dann üblicherweise über den inneren, der Radnabe zugeordneten Bereich oder den dem Radkranz zugeordneten äußeren Randbereich der Radabdeckung, wobei eine kombinierte Krafteinleitung selbstverständlich ebenfalls möglich ist, solange eine ausreichende Federwirkung erzielt wird.

Typischerweise wird die erfindungsgemäße Radabdeckung einen zentralen Formabschnitt aufweisen, der ringförmig und gegenüber der Zentralachse konzentrisch ausgebildet ist. Um die erforderliche Federwirkung zu erzielen, kann die Radabdeckung in einer typischerweise senkrecht zu ihren Stirnfläche ausgerichteten Zentralachse kegel- oder kugelschalenförmig ausgewölbt sein. Durch diese Formgebung der Radabdeckung ist es besonders einfach möglich, die Radabdeckung im montierten Zustand so zu verspannen, dass sie nach Art einer elastischen Feder eine Rückstellkraft ausübt, die dauerhaft mit einer definierten Kraft auf den Radkörper wirkt.

Alternativ oder ergänzend zu der an eine Tellerfeder oder desgleichen angelehnten grundsätzliche Formgebung der Radabdeckung lässt sich die Federwirkung der Radabdeckung bei einfacher Formgebung beispielsweise auch dadurch erzielen, dass am äußeren Rand der Radabdeckung zwei oder mehr beabstandet zueinander angeordnete, radial vorstehende Zungen ausgebildet sind, über die die Radabdeckung gegen den Radkörper wirkt.

Ergibt sich beispielsweise, dass eine wirkungsvolle Verminderung der Schallemission dann erreicht wird, wenn die von der Radabdeckung ausgeübte federnde Druckkraft auf die Radscheibe des Radkörpers gerichtet wird, so kann die Radabdeckung mit ihrem äußeren, dem Radkranz zugeordneten Rand an der Radscheibe des Radkörpers abgestützt werden.

Es kann jedoch im Hinblick auf die angestrebte Schallreduzierung und die Einfachheit der dauerhaft sicheren Montage auch zweckmäßig sein, die Radabdeckung mit ihrem äußeren Rand federnd elastisch gegen eine Innenumfangsfläche des Radkranzes abzustützen.

Die Abstützung der Radabdeckung kann unter fertigungstechnischen Gesichtspunkten dann besonders einfach und mit einer hohen Betriebssicherheit verwirklicht werden, wenn an der Innenumfangsfläche des Radkranzes eine umlaufende Nut vorgesehen ist, in der die Radabdeckung mit ihrem äußeren Rand oder mindestens einem an ihrem äußeren Rand vorgesehenen Kopplungselement mindestens abschnittsweise formschlüssig sitzt. Die Nut kann dabei beispielsweise durch eine spanabhebende Bearbeitung in die Innenumfangsfläche des Radkranzes eingeformt sein. Alternativ ist es jedoch auch denkbar, an dem Randkranz eine Innenumfangsfläche vorzusehen, an der ein Reifen montiert wird, in den entweder selbst eine Nut eingeformt ist oder der an deren einer Seite eine umlaufende Nut begrenzt, deren in Achsrichtung gegenüberliegende Seite durch eine umlaufende Fläche des Radkranzes oder des Radkörpers begrenzt wird. Die Montage des Reifens kann dabei dadurch erfolgen, dass der Reifen in den von der betreffenden Innenumfangsfläche des Randkranzes umgrenzten Durchmesser eingeschrumpft wird. Genauso ist ein Einkleben oder eine Befestigung des Reifens mittels Schrauben oder anderer mechanisch wirkender Befestigungsmittel denkbar. Die auf diese Weise jeweils am Radkranz ausgebildete Nut kann einerseits dazu genutzt werden, die Radabdeckung an ihrem äußeren Umfang zu verspannen. Sie kann andererseits jedoch auch dazu dienen, die Radabdeckung im Sinne einer Lagesicherung gegen ein unbeabsichtigtes Lösen zu sichern. In diesem Fall sitzt die Radabdeckung mit ihrem äußeren Rand oder dort angeordneten Kopplungselementen beispielsweise mit Spiel in der betreffenden Nut.

Unabhängig davon, ob die Radabdeckung mit ihrem äußeren Umfang oder daran befestigten Kopplungselementen in einer Nut sitzt oder nicht, haben praktische Versuche ergeben, dass die Radabdeckung optimalerweise gegen eine Fläche wirkt, die quer, insbesondere normal zur Drehachse des Schienenrads, ausgerichtet ist. Bei dieser Ausrichtung kann auf besonders einfache Weise unter Ausnutzung der Geometrie und der dadurch ermöglichten Nachgiebigkeit der Radabdeckung ihre elastische Anlage an dem Radkörper bewerkstelligt werden.

Eine besonders einfach zu montierende formschlüssige Verbindung ergibt sich dabei beispielsweise dann, wenn am Umfang der Radabdeckung Zungenabschnitte der voranstehend erläuterten Art ausgebildet sind, wobei diese Zungenabschnitte vorzugsweise so geformt sind, dass sie in sich federnd elastisch wirken können, um bei der Montage problemlos in die Nut eingedrückt werden zu können. An ihren freien Enden können die Zungenabschnitte hakenartig oder in anderer Weise ausgebildet sein, damit die Zungenabschnitte nach der Montage passgenau und unverlierbar in der ihnen zugeordneten Nut sitzen. Auf diese Weise kann eine Art von Schnappverbindung geschaffen werden, die es mit wenigen Handgriffen ermöglicht, eine entsprechend ausgebildete Radabdeckung an einem für die erfindungsgemäße Befestigung einer solchen Radabdeckung ausgebildeten Schienenradkörper zu befestigen.

Alternativ ist es auch möglich, zum Abstützen des äußeren Randes der Radabdeckung im Bereich des Übergangs zwischen der Stirnseite und der jeweils zugeordneten Innenfläche des Radkranzes einen umlaufenden Absatz einzuformen. Dies kann insbesondere dann zweckmäßig sein, wenn die Radabdeckung nur eine axial ausgerichtete Druckkraft auf den Radkörper des Schienenrades ausüben soll.

Weiter vereinfacht werden kann die Montage der Radabdeckung bei einem erfindungsgemäß gestalteten Schienenrad dadurch, dass die Radabdeckung eine zentral angeordnete Öffnung aufweist, die fluchtend zur Lageöffnung der Radnabe ausgerichtet ist. Auf diese Weise ist einerseits gesichert, dass die Nabe auch bei montierter Radabdeckung von außen ungehindert zugänglich ist. Zum anderen kann durch Anpassung der Öffnung der Radabdeckung an den Außenumfang der Radnabe auf einfache Weise eine lagerichtige Montage der Radabdeckung an dem Radkörper gesichert werden.

Dies kann dadurch unterstützt werden, dass die Radabdeckung mindestens mit einem Abschnitt ihres der Radnabe zugeordneten, ihre Öffnung umgrenzenden inneren Rands federn elastisch gegen eine Außenumfangsfläche der Radnabe abgestützt ist.

Wie am äußeren Rand der Radabdeckung können auch am ihre Öffnung umgrenzenden inneren Rand der Radabdeckung mehr als eine beabstandet zueinander angeordnete, radial vorstehende Zungen ausgebildet sein, über die die Radabdeckung gegen den Radkörper wirkt. Diese Zungen können nicht nur zur Erzeugung einer in radialer oder normal zur Oberfläche des Radkörpers gerichteter Richtung wirkenden federnden Anpresskraft beitragen, sondern auch dazu genutzt werden, die Radabdeckung dauerhaft an der Radnabe zu befestigen.

Soll die Radabdeckung an einer bestimmten Stelle nicht federnd, sondern fest mit dem Radkörper verbunden werden, um die gewünschte federnde Verspannung zu erzeugen, können dazu sämtliche Befestigungselemente, wie Schrauben, Nieten, Keile etc. verwendet werden, die geeignet sind, eine dauerhaft sichere kraftschlüssige Verbindung herzustellen. Ebenso ist es denkbar, die Radabdeckung fest mit dem Radkörper zu verkleben oder in anderer Weise stoffschlüssig zu verbinden.

Eine minimierte Zahl an Bauteilen und ein entsprechend reduzierter Montageaufwand ergeben sich dann, wenn die Radabdeckung formschlüssig unter Ausnutzung der von der Radabdeckung im montierten Zustand selbst ausgeübten Federkräfte an dem Radkörper gehalten ist. Zu diesem Zweck kann auch an der Außenumfangsfläche der Radnabe eine umlaufende Nut vorgesehen sein, in der die Radabdeckung mit ihrem inneren Rand mindestens abschnittsweise formschlüssig sitzt. Besonders praxisgerecht erweist sich diese Ausgestaltung dann, wenn die Radabdeckung an ihrem inneren Rand Vorsprünge, wie beispielsweise die bereits erwähnten Zungenabschnitte, aufweist und diese so geformt sind, dass sie im montierten Zustand unter Federbelastung passgenau in die Nut greifen.

Auch in diesem Fall kann die an der Außenumfangsfläche der Radnabe vorgesehene Nut direkt beispielsweise durch eine spanabhebende Bearbeitung in die betreffende Außenumfangsfläche der Radnabe eingeformt sein. Ebenso ist es jedoch hier zur Vereinfachung der Herstellung ebenfalls möglich, auf die Radnabe einen Reifen aufzusetzen, in dessen Umfangsfläche die betreffende Nut bereits eingeformt ist, oder einen Reifen an der Radnabe zu montieren, der mit einem korrespondierend geformten Absatz der Radnabe ebenfalls eine Nut begrenzt.

Besonders einfach und kostengünstig realisieren lässt sich die erfindungsgemäße Ausgestaltung eines Schienenrades dann, wenn die Radabdeckung zwischen der Innenumfangsfläche des Radkranzes und der Außenumfangsfläche der Radnabe gespannt ist. Dazu können die voranstehend erläuterten Möglichkeiten der Minimierung der Anzahl der erforderlichen Bauteile genutzt werden. Insbesondere eignet sich zu diesem Zweck eine Ausgestaltung der Erfindung, bei der die Radabdeckung jeweils an ihrem inneren und äußeren Rand über eine Kombination aus geeigneten Vorsprüngen und zugeordneten Ausnehmungen unter Wirkung der von der Radabdeckung selbst ausgeübten Federkraft weitestgehend ausschließlich formschlüssig mit dem Radkörper verkoppelt ist.

Die schallabsorbierende Wirkung der Radabdeckung kann dadurch weiter gesteigert werden, dass mindestens ein Kopplungselement vorgesehen ist, das so zwischen der Radabdeckung und dem Radkörper angeordnet ist, dass die Radabdeckung über dieses Kopplungselement auf den Radkörper wirkt.

Dabei kann das Kopplungselement aus einem schalldämpfenden Werkstoff bestehen, um eine Übertragung von Schwingungen vom Radkörper auf die Radabdeckung zu vermeiden.

Optimalerweise ist das Kopplungselement jedoch nach Art eines Reibelements ausgebildet. Dazu besteht das Kopplungselement in diesem Fall aus einem Material, welches in Bezug auf das an der ihm zugeordneten Anlagefläche des Radkörpers hohen Reibwiderstand aufweist. Auch bei dieser Ausgestaltung ist die Radabdeckung über mindestens ein Kopplungselement an den Radkörper angekoppelt. Dabei herrscht hier jedoch zwischen der Radabdeckung und dem Radkörper eine definierte erhöhte Reibung, welche bewirkt, dass die durch vom Radkörper ausgehenden Schallwellen bewirkten Bewegungen der Radabdeckung in Reibungsenergie, d. h. Wärme, umgesetzt und so die Emission von Schallwellen in Folge der im Betrieb auftretenden Relativbewegung zwischen Radabdeckung und Radkörper effektiv bedämpft wird. Praktische Erprobungen haben gezeigt, dass sich durch die Bedämpfung mit solchen als Reibelemente ausgebildeten Kopplungselementen regelmäßig eine Verminderung des A-Schallleistungspegels eines erfindungsgemäßen Schienenrads um 7dB(A) erreichen lässt.

Denkbar ist es in diesem Zusammenhang, dass die erhöhte Reibung zwischen der Radabdeckung und der ihr zugeordneten Anlagefläche des Radkörpers durch eine reibungserhöhende, auf die betreffende Anlagefläche aufgetragene Beschichtung oder eine dort vorgesehene, die Reibung ebenfalls erhöhende Oberflächenstruktur bewerkstelligt wird.

Grundsätzlich kann auch im Fall, dass das Kopplungselement in der voranstehend erläuterten Weise nach Art eines Reibelements wirkt, ein einziges Kopplungselement, das die Radabdeckung an ihrem inneren oder äußeren Umfang vollständig umgibt, für die erfindungsgemäßen Zwecke ausreichen. Eine hohe Wirksamkeit des Kopplungselements bei gleichzeitig optimaler elastischer Verformbarkeit der Radabdeckung ergibt sich aber beispielsweise auch dann, wenn an der Radabdeckung zwei oder mehr Kopplungselemente um deren zentrale Achse verteilt positioniert sind.

Um die Montage so einfach wie möglich zu halten, kann das Kopplungselement an der Radabdeckung befestigt sein. Dies erweist sich insbesondere dann als vorteilhaft, wenn die Radabdeckung an ihrem inneren oder äußeren Rand Vorsprünge, wie Zungenabschnitte, aufweist, auf deren freien Ende ein Kopplungselement sitzt.

Des Weiteren kann über das Kopplungselement die Radabdeckung thermisch gegenüber dem Radkörper des Schienenrades isoliert werden. Dies ist insbesondere dann zweckmäßig, wenn die Radabdeckung aus einem wärmeempfindlichen Material, wie beispielsweise aus Kunststoff oder einem eine temperaturempfindliche Lage umfassenden Sandwich- oder Verbundwerkstoff, besteht.

Ebenfalls unterstützt werden kann die schallabsorbierende Wirkung der Radabdeckung dadurch, dass sie mindestens in einem Abschnitt mit einem schallabsorbierenden Material beschichtet ist oder mindestens in einem Abschnitt aus einem schallabsorbierenden Werkstoff besteht.

Bei einem solchen Werkstoff kann es sich beispielsweise um einen Verbundwerkstoffe handeln, der aus zwei oder mehr Lagen besteht, von denen beispielsweise eine Lage eine besonders schalldämmende Wirkung hat, während mindestens eine andere Lage auch unter den im praktischen Einsatz auftretenden Belastungen die Formsteifigkeit der Radabdeckung gewährleistet.

Selbstverständlich kann die erfindungsgemäß vorgesehene und verspannte Radabdeckung mit Öffnungen versehen sein, um den zwischen ihr und der Radscheibe begrenzten Raum mit Kühlluft zu durchströmen.

Der durch die Radabdeckung und die Radscheibe des Radkörpers begrenzte Raum kann auch mit einem schalldämpfenden Material gefüllt sein, um die vom Schienenrad ausgehenden Schallemissionen weiter zu reduzieren.

Die Übertragung der aus der federnd elastischen Verspannung der Radabdeckung resultierenden Kräfte auf die Radscheibe kann dadurch zusätzlich verbessert werden, dass am Außenumfang der Formplatte mindestens abschnittsweise ein Stützkragen zur Abstützung der Abdeckung gegen korrespondierend geformte Kontaktflächen des Schienenrades ausgebildet ist.

Die an einem erfindungsgemäßen Schienenrad vorgesehene Radabdeckung kann beispielsweise aus einer Stahl-, Leichtmetall- oder Kunststoffplatine durch eine geeignete Umformoperation gefertigt werden. Dabei kann die Materialauswahl so erfolgen, dass die Radabdeckung nicht nur eine ausreichende Federwirkung ausübt, sondern auch aufgrund ihrer Materialeigenschaften effektiv zu der Minimierung der Schallabstrahlung beiträgt. Hierzu eignen sich insbesondere Verbundwerkstoffe, wobei sowohl Kunststoffe als auch Metalle für einen geeigneten schichtweisen Aufbau der Formplatte verwendet werden können. Durch unterschiedliche Resonanzfrequenzen der einzelnen Schichten ist eine Schallabsorption über große Frequenzbereiche zu erzielen. Darüber hinaus können die günstigen mechanischen Eigenschaften von Verbundwerkstoffen sowohl die Verbindungssicherheit der Radabdeckung als auch die Verschleißbeständigkeit erhöhen. Hierbei hat es sich als besonders vorteilhaft erwiesen, wenn als Verbundwerkstoff ein Material eingesetzt wird, das mindestens dreischichtig aufgebaut ist, wobei die außen liegenden Schichten jeweils aus einem robusten Metallwerkstoff und die dazwischen liegende Schicht aus Kunststoff oder einem anderen besondere schalldämmende Eigenschaften Werkstoff besteht.

Nachfolgend wird die Erfindung anhand von Ausführungsbeispielen näher erläutert. Es zeigen:
- Fig. 1: ein erstes Schienenrad in einer perspektivischen, längsgeschnittenen Ansicht;
- Fig. 2: das erste Schienenrad in perspektivischer Ansicht;

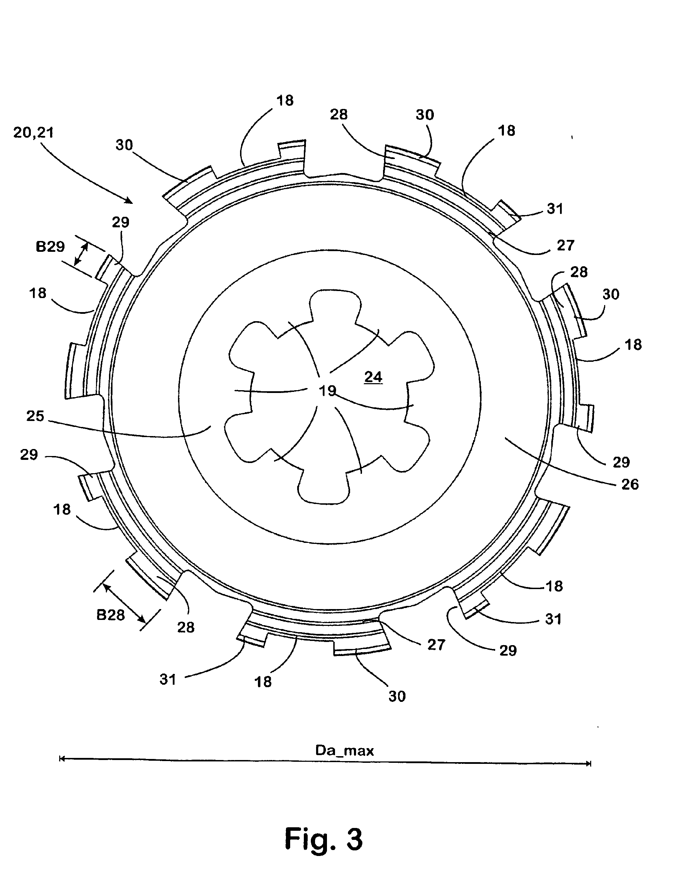

- Fig. 3: eine an dem Schienenrad gemäß Fig. 1 vorgesehene Radabdeckung in frontaler Ansicht;
- Fig. 4: ein zweites Schienenrad in perspektivischer, längsgeschnittener Ansicht;
- Fig. 5: das Schienenrad gemäß Fig. 4 in einer perspektivischen Ansicht;

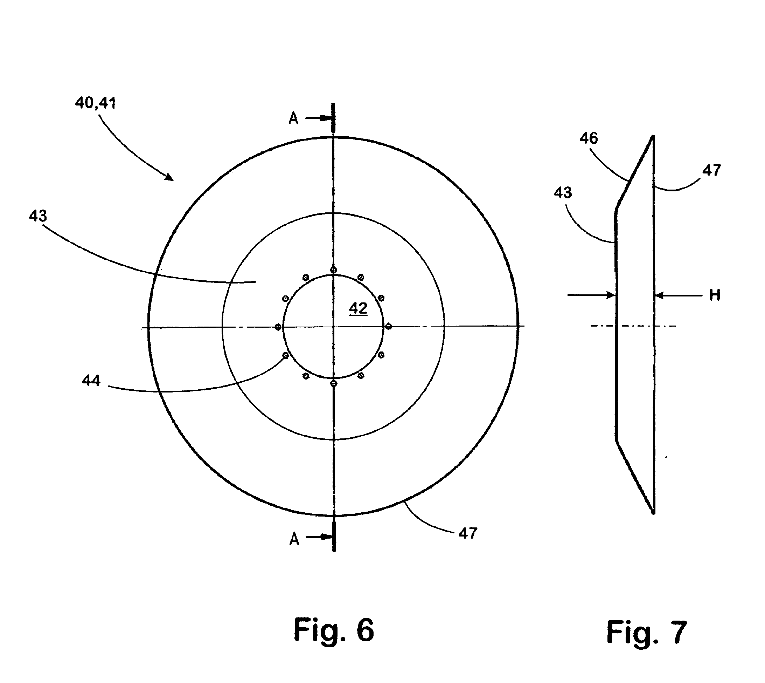

- Fig. 6: eine an dem Schienenrad gemäß Fig. 4 vorgesehene Radabdeckung in frontaler Ansicht;
- Fig. 7: die Radabdeckung gemäß Fig. 6 in einem Längsschnitt entlang der in Fig. 6 eingezeichneten Schnittlinie A-A;
- Fig. 8: ein drittes Schienenrad in perspektivischer, längsgeschnittener Ansicht;
- Fig. 9: ein weiteres Schienenrad in einer längsgeschnittenen Ansicht;
- Fig. 10: eine erste alternative Ausgestaltung des Schienenrads gemäß Fig. 9;
- Fig. 11: eine zweite alternative Ausgestaltung des Schienenrads gemäß Fig. 9;
- Fig. 12: eine für die in den Figuren 9 - 11 vorgesehene Radabdeckung in frontaler Ansicht.

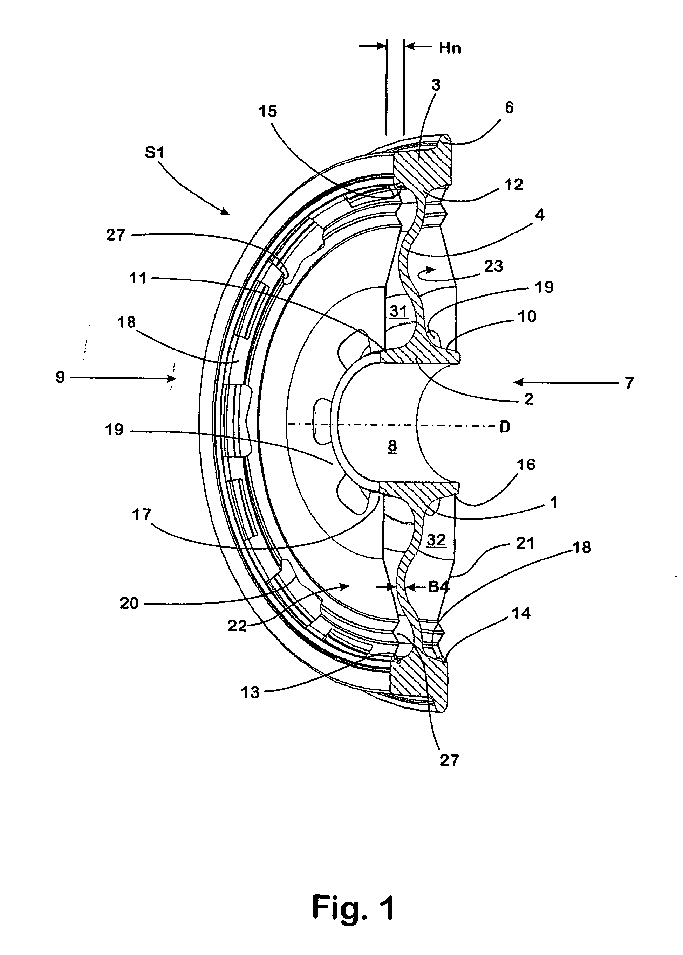

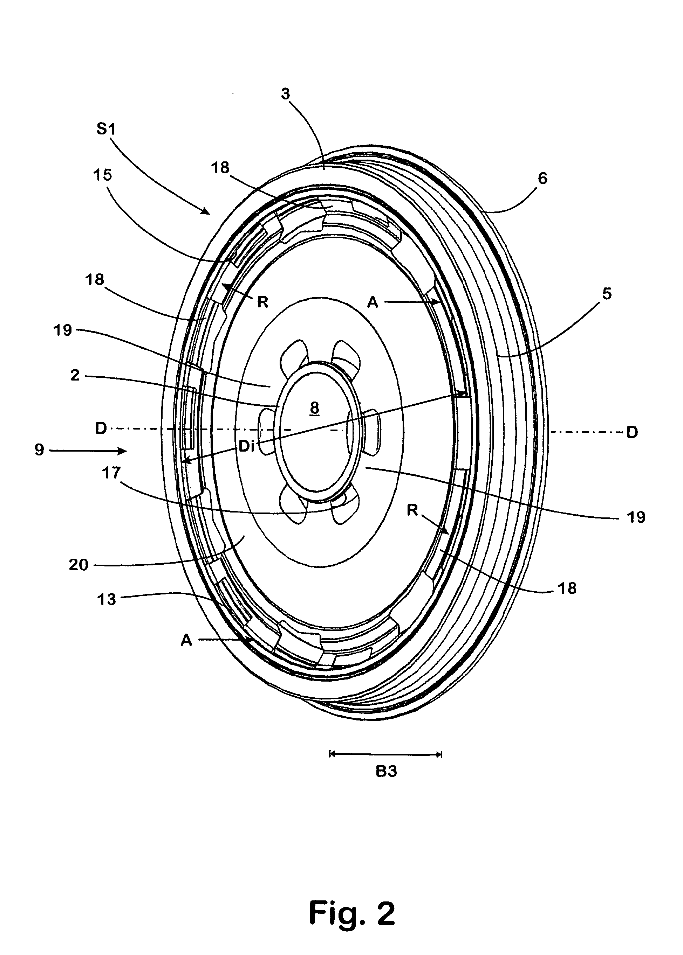

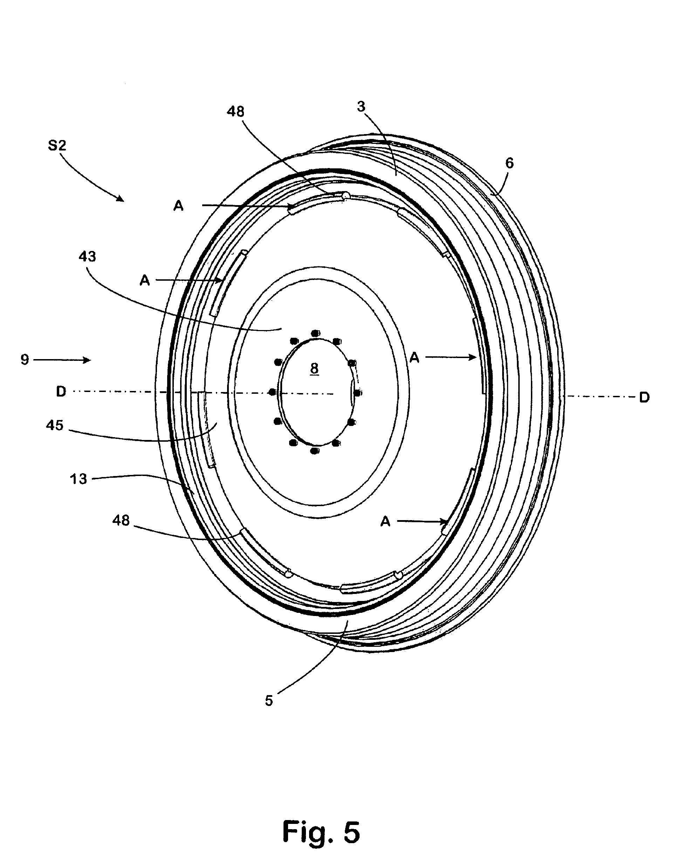

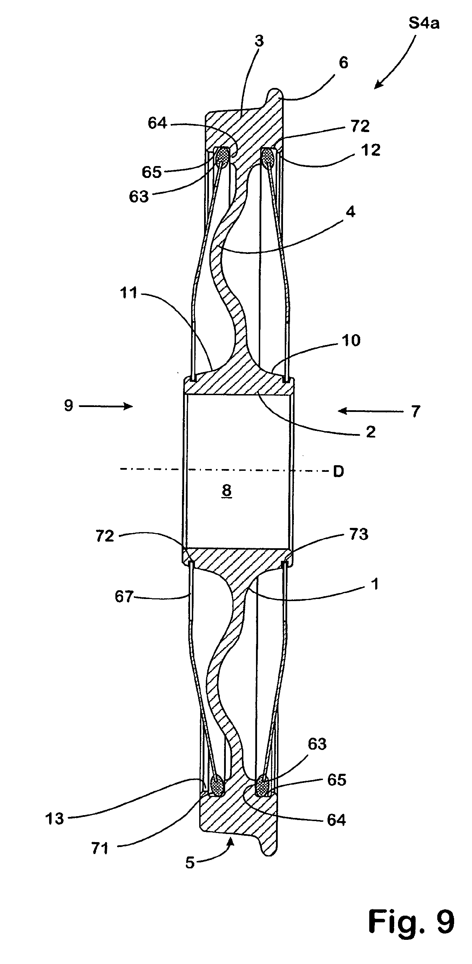

Die in den Figuren 1,2,4, 5 und 8 - 12 gezeigten Schienenräder S1 - S4c für ein Schienenfahrzeug, wie einem Personen- oder Lastwagon, weisen jeweils einen einstückig ausgebildeten Radkörper 1 auf, der eine Radnabe 2, einen Radkranz 3 und eine Radscheibe 4 umfasst, die sich zwischen Radnabe 2 und Radkranz 3 erstreckt und über die der Radkranz 3 auf der Radnabe 2 abgestützt ist.

Am äußeren Umfang des Radkranzes 3 ist in konventioneller Weise eine sich über den wesentlichen Teil der Breite B3 des Radkranzes 3 erstreckende Lauffläche 5, über die das jeweilige Schienenrad S1 - S4c im Fahrbetrieb auf einer hier nicht gezeigten Schiene abrollt, und ein Spurkranz 6 ausgebildet, der bündig zur rückwärtigen, dem hier ebenfalls nicht gezeigten Fahrgestell des jeweiligen Schienenfahrzeugs zugeordneten rückwärtigen Stirnseite 7 des jeweiligen Schienenrades S1 - S4c positioniert ist und das Schienenrad S1 - S4c im Fahrbetrieb an der jeweils zugeordneten Schiene führt.

Bei jedem der Schienenräder S1 - S4c weist die Radnabe 2 eine Lageröffnung 8 für ein hier nicht dargestelltes Lager auf, über das das jeweilige Schienenrad S1 - S4c an dem zugeordneten Fahrgestell gelagert werden kann.

Die Radscheibe 4 der Schienenräder S1 - S4c ist beim hier gezeigten Ausführungsbeispiel im Querschnitt jeweils gewellt ausgebildet, kann jedoch auch jede andere Querschnittsform aufweisen. Dabei ist die Breite B4 der Radscheibe 4 wesentlich geringer als die Breite der Radnabe 2 und die Breite B3 des Radkranzes 3, so dass sowohl die Radnabe 2 als auch der Radkranz 3 in Richtung der Drehachse D des jeweiligen Schienenrades S1 - S4c gesehen in Richtung der rückwärtigen Stirnseite 7 als auch in Richtung der vorderen Stirnseite 9 über die Radscheibe 4 hinausstehen. Dementsprechend weist die Radnabe 2 eine rückseitige äußere Umfangsfläche 10 und eine vorderseitige äußere Umfangsfläche 11 auf. Genauso ist am Radkranz 3 eine rückseitige innere Umfangsfläche 12 und eine vorderseitige innere Umfangsfläche 13 vorhanden.

Beim Schienenrad S1 ist in die inneren Umfangsflächen 12,13 des Radkranzes 3 jeweils eine umlaufende Nut 14,15 eingeformt. Ebenso ist in die äußeren Umfangsflächen 10,11 der Radnabe 2 jeweils eine umlaufende Nut 16,17 eingeformt.

In die Nut 14 des Radkranzes 3 und die Nut 15 der Radnabe 2 greifen Zungenabschnitte 18,19 einer der vorderen Stirnseite 8 zugeordneten ersten Radabdeckung 20, die dort zwischen der Radnabe 2 und dem Radkranz 3 gespannt ist. In gleicher Weise greifen in die Nut 15 des Radkranzes 3 und die Nut 16 der Radnabe 2 Zungenabschnitte 18,19 einer der rückwärtigen Stirnseite 7 zugeordneten zweiten Radabdeckung 21, die dort zwischen der Radnabe 2 und dem Radkranz 3 gespannt und genauso geformt ist wie die erste Radabdeckung 20.

Die Radabdeckungen 20,21 sind einstückig aus einem Verbundmaterial geformt, das beispielsweise eine aus einem Stahlwerkstoff bestehende erste Lage, eine darauf liegende Lage aus einem Kunststoffmaterial und eine darauf liegende, aus einem Leichtmetallwerkstoff bestehende zweite äußere Lage aufweist. Zusätzlich kann das Verbundmaterial auf einer oder beiden seiner Stirnflächen 22,23 mit einer schalldämpfenden Beschichtung versehen sein.

Um eine zentrale Öffnung 24 der Radabdeckungen 20,21 herum sind in regelmäßigen Winkelabständen die inneren Zungenabschnitte 19 angeordnet, deren Länge derart bemessen ist, dass sie bei fertig montierter Radabdeckung 20,21 formschlüssig in die ihnen jeweils zugeordnete Nut 16,17 der Radnabe 2 greifen. Die Zungenabschnitte 19 stehen dabei als in radialer Richtung zum Mittelpunkt der Radabdeckung 20,21 gerichtete Verlängerungen eines ringförmigen, ebenen Zentralabschnitts 25 vor. Dieser ist von einem kegelig gewölbten Umfangsabschnitt 26 umgeben.

Am äußeren Umfang des Umfangsabschnitt 26 sind in regelmäßigen Winkelabständen verteilt die äußeren Zungenabschnitte 18 ausgebildet, die bei fertig montierter Radabdeckung 20,21 in die Nuten 14,15 des Radkranzes 3 greifen.

In den Übergangsbereich 26 der äußeren Zungenabschnitte 18 ist dabei jeweils eine Federsicke 27 eingeformt, die im Querschnitt spitzdachförmig mit einem in Richtung der vorderen Stirnseite 22 gerichteten First ausgebildet ist. An die Federsicke 27 schließen sich jeweils zwei in Umfangsrichtung der Radscheibe mit Abstand zueinander angeordnete Koppelabschnitte 28,29 an. Die Breite B28 des einen Koppelabschnitts 28 ist dabei größer als die Breite B29 des anderen Koppelabschnitts 29, um die Entstehung von harmonischen Schwingungen zu vermeiden.

An ihren freien Enden tragen die Koppelabschnitte 28,29 jeweils ein aus einem dämpfenden elastischen Kunststoffmaterial bestehendes Kopplungselement 30,31, das sich über die jeweilige Breite B28,B29 der Koppelabschnitte 28,29 erstreckt und so geformt ist, dass es bei fertig montierter Radabdeckung 20,21 formschlüssig in der der jeweiligen Radabdeckung 20,21 zugeordneten Nut 14,15 des Radkranzes 3 sitzt.

Die Länge der Zungenabschnitte 18 ist dabei so bemessen, dass der maximale Außendurchmesser Da_max. der Radabdeckungen 20,21 im losen, unmontierten Zustand um ein bestimmtes Übermaß größer ist als der Innendurchmesser Di des vom Grund der Nuten 14,15 jeweils umschlossenen Kreises. Im fertig am montierten Schienenrad S1 montierten Zustand sind deshalb die Zungenabschnitte 18 im Bereich ihrer Federsicke 27 proportional zu dem betreffenden Übermaß federnd elastisch gestaucht. Infolgedessen sind die Radabdeckungen 20,21 im fertig montierten Zustand unter einer in radialer Richtung gegen den Radkranz 3 gerichteten Druckkraft R an dem Radkörper 1 gehalten. Gleichzeitig ist die Höhe der jeweiligen Radabdeckung 20,21 im losen, nicht montieren Zustand in Bezug auf einen zwischen der jeweiligen Nut 14,15 des Radkranzes 3 und der zugeordneten Nut 16,17 der Radnabe 2 in axialer Richtung bestehenden Abstand Hn so bemessen, dass die jeweilige Radabdeckung 20,21 über die Kopplungselemente 31,32 der Zungenabschnitte 18 auch in axialer Richtung nach Art einer Tellerfeder eine federnd elastische Druckkraft A gegen den Radkörper 1 ausübt. Die im Fahrbetrieb über den Radkranz 3 angeregten und durch die Radscheibe 4 verstärkten Schallwellen werden so wirksam gedämpft. Dabei kann die Dämpfungswirkung zusätzlich dadurch unterstützt werden, dass der zwischen der jeweiligen Radscheibe 20,21 und der Radscheibe 4 begrenzte Hohlraum 33,34 mit einem hier nicht dargestellten Dämpfungsmaterial, beispielsweise einer Glaswolle, einem Schaumstoffmaterial oder desgleichen, gefüllt ist.

Auch beim Schienenrad S2 ist an der vorderen Stirnseite 9 und der rückseitigen Stirnseite 7 jeweils eine Radabdeckung 40,41 auf dem Radkörper 1 befestigt.

Die in zentraler Draufsicht kreisförmigen Radabdeckungen 40,41 weisen eine ringförmige, kegelige Grundform mit einer zentralen Öffnung 42 auf, deren Durchmesser dem Durchmesser der Lageröffnung 8 der Radnabe 2 entspricht. Die zentrale Öffnung 42 ist von einem ebenen ringförmigen Zentralabschnitt 43 umgeben. In dessen der Öffnung 42 zugeordneten Randbereich sind in regelmäßigen Abständen Durchgangsöffnungen 44 für Schrauben 45 eingeformt, die zum Befestigen der jeweiligen Radabdeckung 40,41 an dem Radkörper 1 des Schienenrads S2 dienen.

An den ebenen Zentralabschnitt 43 schließt sich ein kegelig gewölbter, den Zentralabschnitt 43 umgebender Umfangsabschnitt 46 an, an dessen äußeren Rand 47 in regelmäßigen Winkelabständen verteilt aus einem dämpfenden Material bestehende Kopplungselemente 48 angeordnet sind. Selbstverständlich kann auch ein einziges ringförmiges, um den äußeren Rand des Umfangsabschnitts 46 umlaufendes Kopplungselement vorgesehen sein, auf dessen Darstellung hier der Übersichtlichkeit halber jedoch verzichtet worden ist.

Die Radabdeckungen 40,41 weisen demzufolge eine einer Tellerfeder entsprechende Grundform auf, wobei im losen, nicht montierten Zustand die Höhe H, über die sich der ebene Zentralabschnitt 43 über den äußeren Rand 47 des gewölbten Umfangsabschnitts 46 erhebt, größer ist als der in axialer Richtung parallel zur Drehachse D gemessene Abstand Ha der freien Stirnfläche der Radnabe 2 und dem dem Radkranz 3 zugeordneten Randbereich 49 der Radscheibe 4, auf dem der äußere Rand 47 des gewölbten Umfangsabschnitts 46 der Radabdeckung 40,41 im fertig an dem Radkörper 1 des Schienenrads S2 montierten Zustand anliegt.

Bei der Montage der jeweiligen Radabdeckung 40,41 an dem Radkörper 1 des Schienenrads S2 werden die Schrauben 45 in ihnen zugeordnete, in die freie ringförmige Stirnfläche der Radnabe 2 eingeformte Schraubenöffnungen geschraubt. Durch die im Bereich der Radnabe 2 mittels der Schrauben 45 erfolgten festen Einspannung sind die Radabdeckungen 40,41 in Folge der Differenz zwischen der Höhe H und dem Abstand Ha im fertig montierten Zustand in axialer Richtung so verspannt, so dass sie nach Art einer Tellerfeder über die an ihrem äußeren Rand 47 sitzenden Kopplungselemente 48 eine elastisch federnde Druckkraft A gegen den Radkörper 1 des Schienenrads S2 ausüben. Auf diese Weise werden auch hier die von der Radscheibe 4 abgesendeten Schallwellen deutlich reduziert bzw. gedämpft, wobei die Dämpfungswirkung auch hier zusätzlich dadurch verstärkt werden kann, dass der zwischen der jeweiligen Radabdeckung 40,41 und der Radscheibe 4 des Schienenrads S2 begrenzte Hohlraum 50,51 mit hier nicht gezeigtem Dämpfungsmaterial gefüllt sein kann.

Um die Elastizität der Radabdeckungen 40,41 zu erhöhen, kann beispielsweise umlaufend um den gewölbten Umfangsabschnitt 46 eine hier nicht dargestellte, nach Art der Federsicken 27 der Radabdeckungen 20,21 ausgebildete Federsicke in die Radabdeckungen 40,41 eingeformt sein.

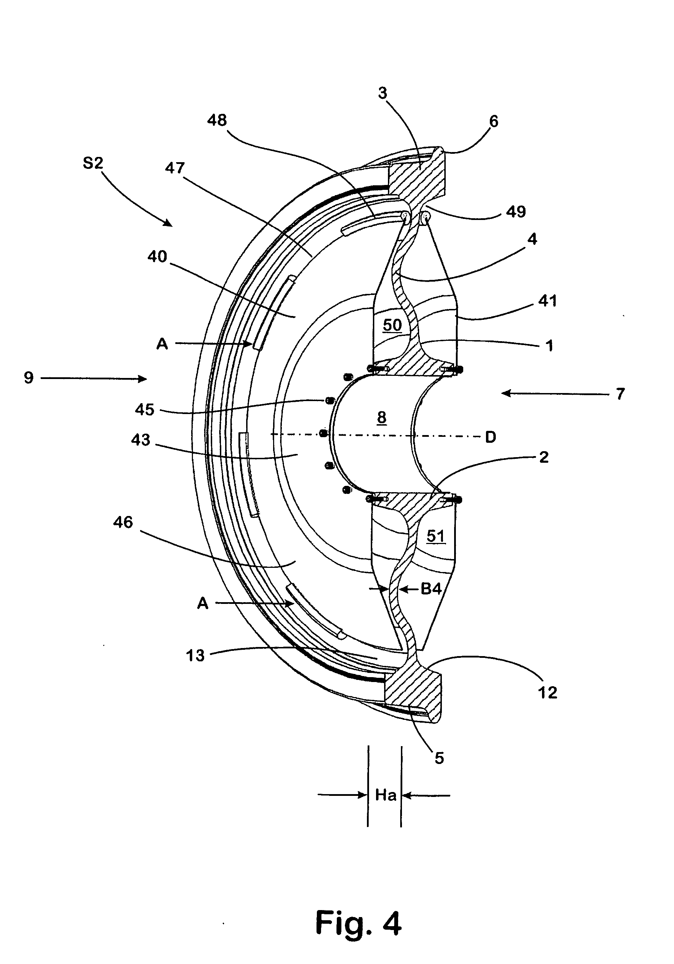

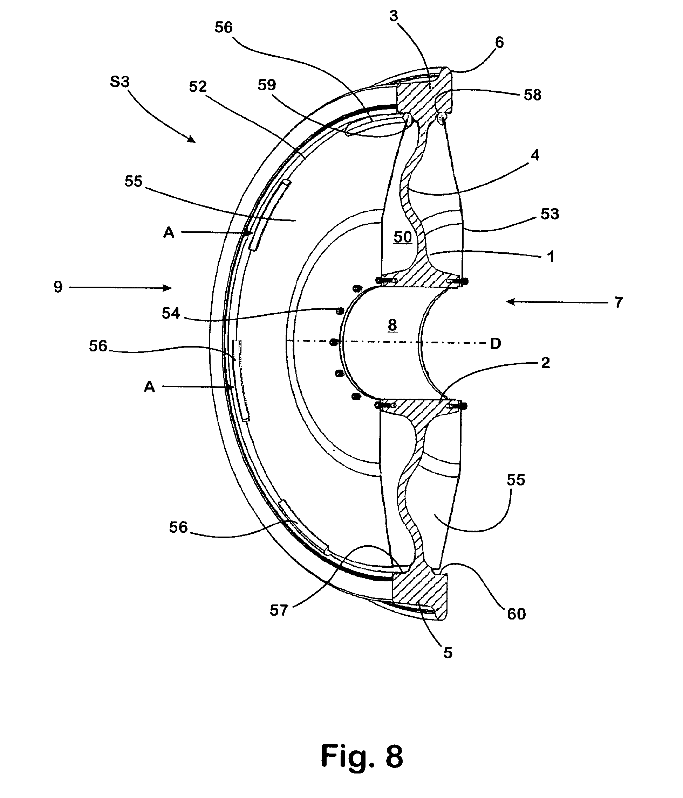

Das in Fig. 8 dargestellte Schienenrad S3 entspricht hinsichtlich seiner grundsätzlichen Formgebung und der Gestalt der an ihm vorgesehenen Radabdeckungen 52,53 dem Schienenrad S2 mit seinen Radabdeckungen 40,41. So weisen die Radabdeckungen 52,53 dieselbe Grundform auf wie die Radabdeckungen 40,41 und sind mittels Schrauben 54 an dem Radkörper befestigt, die wie die Schrauben 45 beim Schienenrad S2 um die Lageröffnung 8 herum verteilt angeordnet sind. Im Unterschied zu den Radabdeckungen 40,41 sitzt beim Schienenrad S3 allerdings der kegelförmige Umfangsabschnitt 55 der Radabdeckungen 52,53 mit den an seinem Rand befestigten Kopplungselementen 56 jeweils auf einem umlaufenden Absatz 57,58 auf, der in den Radkranz 3 im Bereich des Übergangs von der jeweiligen Stirnseite 7,9 des Radkranzes 3 zu der jeweiligen inneren Umfangsfläche 59,60 des Radkranzes 3 eingeformt ist. Auf diese Weise wirkt die von den Radabdeckungen 52,53 in größtmöglicher Nähe zum äußeren Umfang des Radkranzes 3, so dass über die in Fig. 4 dargestellte Variante eines erfindungsgemäßen Schienenrads hinaus beim Schienenrad S3 eine optimale Abschirmung auch der Schwingungen erzielt wird, die am Radkranz 3 selbst oder im Bereich des Übergangs zwischen Radkranz 3 und Radscheibe 4 freigesetzt werden.

Die Schienenräder S4a - S4c sind grundsätzlich so aufgebaut wie das Schienenrad S1, so dass hier der Einfachheit halber für gleiche Form- und Bauteile dieselben Bezugsziffern verwendet werden.

Die bei den Schienenrädern S4a - S4c jeweils vorgesehenen Radabdeckungen 61,62 sind ebenfalls nach Art einer Tellerfeder ausgebildet. An ihrem äußeren Umfang sind in bezogen auf die Drehachse D gleichmäßigen Winkelabständen verteilt eine größere Zahl, konkret beispielsweise einundzwanzig, von Kopplungselementen 63 angeordnet. Die Kopplungselemente 63 bestehen dabei aus einem Material, das bei Anlage an der den Kopplungselement 63 zugeordneten Anlageflächen 64,65 des Radkörpers 1 mit dem dort vorhandenen Schmiedestahlmaterial einen erhöhten Reibungswiderstand bewirkt.

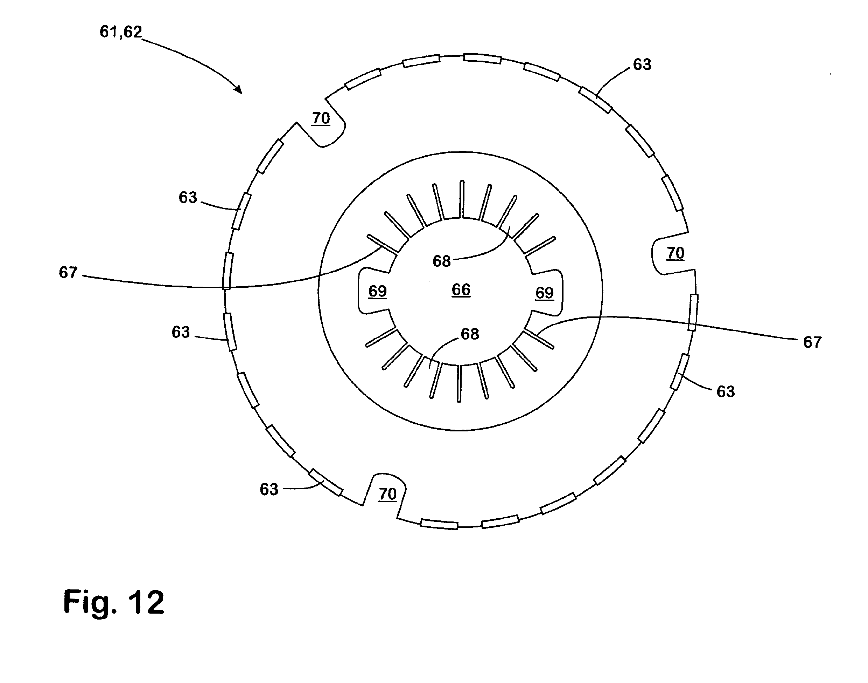

Die Radabdeckungen 61,62 (Fig. 12) weisen wie die Radabdeckungen 20,21 die Grundform einer Tellerfeder mit einer zentralen Öffnung 66 auf. In den die zentrale Öffnung 66 umgebenden Randbereich der Radabdeckungen 61,62 sind jeweils in regelmäßigen Winkelabständen um die Drehachse D verteilt radial nach außen strebende Schlitze 67 eingeschnitten, durch die zungenartige innere Zungenabschnitte 68 der Radabdeckungen 61,62 voneinander abgeteilt sind. Um für die Montage größere Eingriffsabschnitte 69 zu schaffen, fehlen dabei an zwei gegenüberliegenden Positionen der jeweilige innere Zungenabschnitt vollständig. Drei entsprechend geformte Eingriffsabschnitte 70 sind vom Außenumfang her in 120°-Abständen in den äußeren Randbereich der Radabdeckungen 61,62 eingeschnitten.

Bei am Radkörper 1 montierten Radabdeckungen 61,62 sitzen die Kopplungselemente 63 der jeweiligen Radabdeckungen 61,62 mit ihrem in radialer Richtung außen liegenden Umfangsabschnitt jeweils gemeinsam in einer umlaufenden Nut 71,72, die in die innere Umfangsfläche 12 bzw. 13 des Radkranzes 3 eingeschnitten ist. Die innere, der Radscheibe 4 zugeordnete Seitenfläche der jeweiligen Nut 71,72 bildet dabei die erste zugeordnete Anlagefläche 64, an der die Kopplungselemente 63 mit Reibkontakt anliegen. Gleichzeitig liegen die Kopplungselemente 63 mit ihren äußeren Umfangsflächen am Grund der jeweiligen Nut 71,72 an, der die zweite zugeordnete Anlagefläche 65 bildet, an der die Kopplungselemente 63 mit Reibkontakt elastisch angedrückt sind.

Die die zentrale Öffnung 66 der Radabdeckungen 61,62 umgebenden inneren zungenartigen Zungenabschnitte 68 greifen ebenso formschlüssig in jeweils eine umlaufende Nut 73,74, die in die jeweilige äußere Umfangsfläche 10,11 der Radnabe 2 geschnitten ist. Auf diese Weise sind die Radabdeckungen 61,62 ohne weitere mechanisch wirkende Befestigungsmittel verliersicher so am Radkörper 1 des Schienenrads S4a gehalten, dass die Kopplungselemente 63 unter elastischem Druck an den Anlageflächen 64,65 anliegen. Aufgrund der in der jeweiligen Kontaktzone bestehenden Reibung wird im praktischen Betrieb die aus den Bewegungen der Kopplungskörper 63 relativ zum Radkörper 1 entstehende Bewegungsenergie in Wärme umgesetzt, so dass eine andernfalls eintretende Schallemission wirksam unterdrückt wird.

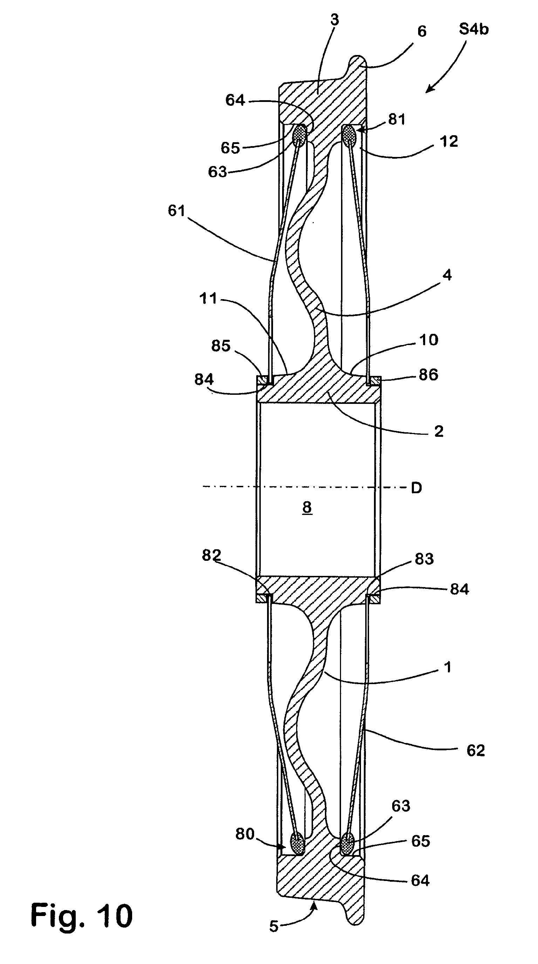

Das in Fig. 10 gezeigte Schienenrad S4b entspricht in seinem Grundaufbau und der Art der Befestigung der bei ihm jeweils ebenfalls verbauten Radabdeckungen 61,62 dem Scheibenrad S4a. Beim Schienenrad S4b ist jedoch in die inneren Umfangsflächen 12,13 des Randkranzes 3 jeweils keine Nut eingeformt, sondern von der jeweiligen Stirnseite her ein umlaufender Absatz 80,81, dessen jeweils der Radscheibe 4 zugeordnete, normal zur Drehachse D ausgerichtete Begrenzungsfläche die eine der den Kopplungselementen 63 zugeordneten Anlageflächen 64 und deren umfangsseitig umlaufende Begrenzungsfläche die jeweils umfangseitige zweite zugeordnete Anlagefläche 65 für die Kopplungselemente 63 bildet.

Um die in die Außenumfangsflächen 10,11 der Radnabe 2 eingeformten Nuten 82,83 zu bilden, sind in diesem Fall in die Radnabe 2 von deren jeweiligen Stirnseite her jeweils ein Absatz 84 eingeformt, auf den jeweils ein Reifen 85,86 aufgeschrumpft ist. Die Breite der Reifen 85,86 ist dabei unter Berücksichtigung der Tiefe des jeweiligen Absatzes 84 so bemessen, dass zwischen dem jeweiligen Reifen 85,86 und der normal zur Drehachse D ausgerichteten Begrenzungsfläche des jeweiligen Absatzes 84 die dort vorgesehene Nut 81,82 verbleibt. In der Nut 81,82 sitzt die der jeweiligen Seite 7,9 des Schienenrads S4b zugeordnete Radabdeckung 61,62 mit ihren inneren zungenartigen Zungenabschnitten 68.

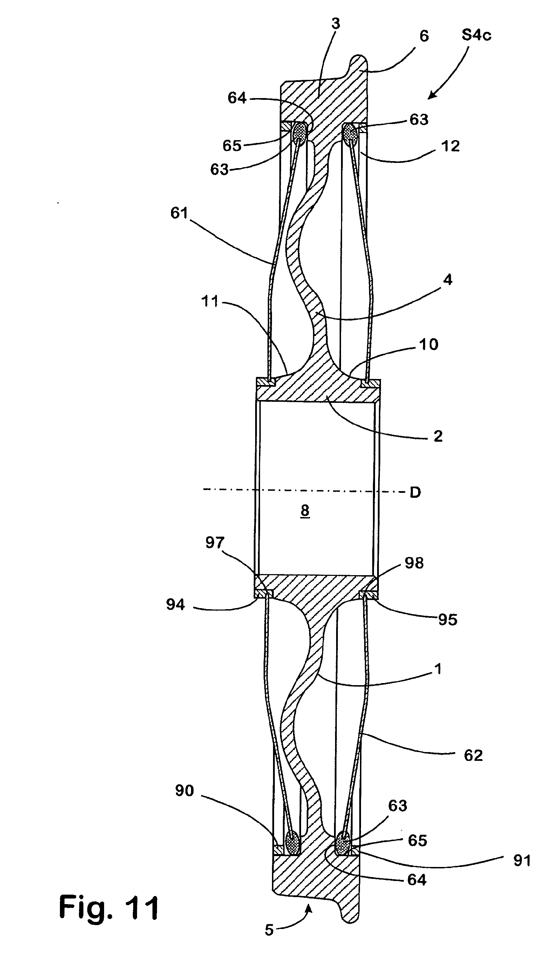

Der Radkörper 1 des in Fig. 11 dargestellten Schienenrads S4c entspricht identisch dem Radkörper 1 des Schienenrads S4b. Zur Sicherung ist jedoch in den jeweiligen umlaufenden Absatz 80,81 jeweils ein Reifen 90,91 eingeklebt oder eingeschrumpft, dessen Breite so bemessen ist, dass zwischen der jeweiligen zugeordneten Anlagefläche 64 und der ihr gegenüberliegenden Seitenfläche des jeweiligen Reifens 90,91 ausreichend Spiel für eine achsparallel zur Drehachse D ausgerichtete Bewegung der Kopplungselement 63 entlang der umfangsseitigen zugeordneten Anlagefläche 65 bleibt.

Auf die Absätze 84 der Radnabe 2 ist beim Schienenrad 4c ebenfalls jeweils ein Reifen 95,96 aufgeklebt oder aufgeschrumpft. Jedoch nehmen die Reifen 95,96 jeweils die gesamte Tiefe des jeweiligen Absatzes 84 ein. Die zur Befestigung der inneren Zungenabschnitte 68 hier ebenfalls vorgesehenen Nuten 97,98 sind dabei in die äußere Umfangsfläche der Reifen 95,96 eingeformt. Der jeweilige Reifen 95,96 kann dabei auf einfache Weise als Präzisionsbauteil vorgefertigt werden, während am Radkörper 1 selbst nur eine vergleichbar grobe spanende Bearbeitung für die Herstellung des jeweiligen Absatzes 84 erforderlich ist.

| **Bezugszeichen** | **Bauteil / Maß** |
|---|---|
| A | in axialer Richtung gegen den Radkörper 1 gerichtete Druckkraft |
| B3 | Breite des Radkranz 3 |
| B4 | Breite der Radscheibe 4 |
| B28 | Breite des Koppelabschnitts 28 |
| B29 | Breite des Koppelabschnitts 29 |
| D | Drehachse des jeweiligen Schienenrades S1 - S4c |
| Da max | maximaler Außendurchmesser der Radabdeckungen 20,21 |
| Di | Innendurchmesser des vom Grund der Nuten 14,15 jeweils umschlossenen Kreises |
| H | Höhe, über die sich der ebene Zentralabschnitt 43 über den äußeren Rand 47 des gewölbten Umfangsabschnitts 46 erhebt |
| Ha | Abstand zwischen der freien Stirnfläche der Radnabe 2 und dem dem Radkranz 3 zugeordneten Randbereich 49, auf dem der äußere Rand 47 des gewölbten Umfangsabschnitts 46 der Radabdeckung 40,41 im fertig an dem Radkörper 1 des Schienenrads S2 montierten Zustand anliegt |
| Hn | Abstand zwischen der jeweiligen Nut 14,15 des Radkranzes 3 und der zugeordneten Nut 16,17 der Radnabe 2 in axialer, auf die Drehachse D bezogener Richtung |
| R | in radialer Richtung gegen den Radkranz 3 gerichtete Druckkraft |
| S1 - S4c | Schienenräder |
| 1 | Radkörper |
| 2 | Radnabe |
| 3 | Radkranz |
| 4 | Radscheibe |
| 5 | Lauffläche des Radkranz 3 |
| 6 | Spurkranz des Radkranz 3 |
| 7 | rückwärtige Stirnseite des jeweiligen Schienenrades S1 - S4c |
| 8 | Lageröffnung |
| 9 | vordere Stirnseite des jeweiligen Schienenrades S1 - S4c |
| 10 | rückseitige äußere Umfangsfläche der Radnabe 2 |
| 11 | vorderseitige äußere Umfangsfläche der Radnabe 2 |
| 12 | rückseitige innere Umfangsfläche des Radkranzes 3 |
| 13 | vorderseitige innere Umfangsfläche des Radkranzes 3 |
| 14, 15 | umlaufende Nut der innere Umfangsflächen 12,13 |
| 16, 17 | umlaufende Nut der äußeren Umfangsflächen 10,11 |
| 18 | äußere Zungenabschnitte der Radabdeckung 20,21 |
| 19 | innere Zungenabschnitte der Radabdeckung 20,21 |
| 20 | erste Radabdeckung |
| 21 | zweite Radabdeckung |
| 22 | vordere Stirnfläche der Radabdeckungen 20,21 |
| 23 | hintere der Radscheibe 4 zugeordnete Stirnfläche der Radabdeckung 20,21 |
| 24 | zentrale Öffnung der Radabdeckungen 20,21 |
| 25 | ebener ringförmiger Zentralabschnitt der Randabdeckungen 20,21 |
| 26 | kegelig gewölbter Umfangsabschnitt |
| 26 | Übergangsbereich der äußeren Zungenabschnitte 18 |
| 27 | Federsicke der äußeren Zungenabschnitte 18 |
| 28, 29 | Koppelabschnitte der äußeren Zungenabschnitte 18 |
| 30, 31 | Kopplungselemente |
| 32, 33 | zwischen der jeweiligen Radscheibe 20,21 und der Radscheibe 4 begrenzter Hohlraum |
| 40, 41 | Radabdeckungen |
| 42 | zentrale Öffnung der Radabdeckungen 40,41 |
| 43 | ringförmiger Zentralabschnitt der Radabdeckungen 40,41 |
| 44 | Durchgangsöffnungen |
| 45 | Schrauben |
| 46 | kegelförmiger Umfangsabschnitt der Radabdeckungen 40,41 |
| 47 | äußerer Rand des Umfangsabschnitts 46 |
| 48 | Kopplungselemente |
| 49 | dem Radkranz 3 zugeordneter Randbereich der Radscheibe 4 |
| 50, 51 | zwischen der jeweiligen Radscheibe 40,41 und der Radscheibe 4 begrenzter Hohlraum |
| 52, 53 | Radabdeckungen |
| 54 | Schrauben |
| 55 | jeweiliger kegelförmiger Umfangsabschnitt der Radabdeckungen 52,53 |
| 56 | Kopplungselemente |
| 57, 58 | umlaufender Absatz |
| 59, 60 | innere Umfangsflächen des Radkranzes 3 |
| 61, 62 | Radabdeckungen |
| 63 | Kopplungselemente |
| 64, 65 | zugeordnete Anlageflächen des Radkörpers 1 |
| 66 | zentrale Öffnung der Radabdeckungen 61,62 |
| 67 | Schlitze |
| 68 | innere Zungenabschnitte |
| 69 | Eingriffsabschnitte am Innenumfang der Radabschnitte 61,62 |
| 70 | Eingriffsabschnitte am Außenumfang der Radabdeckungen 61,62 |
| 71, 72 | Nuten |
| 73, 74 | Nuten |
| 80, 81 | Absätze |
| 82, 83 | Nuten |
| 84 | Absätze |
| 85, 86 | Reifen |
| 90, 91 | Reifen |
| 95, 96 | Reifen |
| 97, 98 | Nuten |

## Patentansprüche

1. Schienenrad mit einem eine Radscheibe (4), eine zentral in der Radscheibe (4) angeordnete Radnabe (2) und einen von der Radscheibe (4) getragenen Radkranz (3) umfassenden Radkörper (1) sowie einer an dem Schienenrad (S1 - S4c) befestigten, zur Dämpfung von durch die Abrollbewegung des Schienenrades (S1 - S4c) im Fahrbetrieb entstehenden Schallemissionen vorgesehenen Radabdeckung (20,21;40,41;61,62), die die Radscheibe (4) des Radkörpers (1) an mindestens einer ihrer Stirnseiten (7,9) zumindest abschnittsweise gegenüber der Umgebung abdeckt und dabei einerseits an einem der Radnabe (2) zugeordneten inneren Bereich des Radkörpers (1) und anderseits an einem dem Radkranz (3) zugeordneten äußeren Randbereich des Radkörpers (1) abgestützt ist, **dadurch gekennzeichnet, dass** die Radabdeckung (20,21;40,41;61,62) im Bereich ihres dem Radkranz (3) und/oder der Radnabe (2) des Radkörpers (1) zugeordneten Rands eine federnd elastische Druckkraft (A,R) gegen den Radkörper (1) ausübt.

2. Schienenrad nach Anspruch 1, **dadurch gekennzeichnet, dass** die Radabdeckung (20,21;40,41;61,62) in ihrem der Radnabe (2) zugeordneten Bereich fest mit dem Radkörper (1) verbunden ist, während sie mit ihrem äußeren Rand (47) federnd elastisch auf den Radkörper (1) wirkt.

3. Schienenrad nach einem der voranstehenden Ansprüche, **dadurch gekennzeichnet,** d a s s die Radabdeckung (20,21;40,41;61,62) nach Art einer Tellerfeder ausgebildet ist.

4. Schienenrad nach einem der voranstehenden Ansprüche, **dadurch gekennzeichnet, dass** am äußeren Rand der Radabdeckung (20,21;40,41;61,62) zwei oder mehr beabstandet zueinander angeordnete, radial vorstehende Zungenabschnitte (18) ausgebildet sind, über die die Radabdeckung (20,21;40,41;61,62) gegen den Radkörper (1) wirkt.

5. Schienenrad nach einem der voranstehenden Ansprüche, **dadurch gekennzeichnet, dass** die Radabdeckung (20,21;40,41;61,62) mit ihrem äußeren Rand (47) federnd elastisch gegen eine Innenumfangsfläche (12,13) des Radkranzes (3) abgestützt ist.

6. Schienenrad nach Anspruch 5, **dadurch gekennzeichnet, dass** an einer Innenumfangsfläche (12,13) des Radkranzes (3) eine umlaufende Nut (14,15,71,72) vorgesehen ist, in der die Radabdeckung (20,21;40,41;61,62) mit ihrem äußeren Rand mindestens abschnittsweise formschlüssig sitzt.

7. Schienenrad nach einem der voranstehenden Ansprüche, **dadurch gekennzeichnet, dass** die Radabdeckung (20,21;40,41;61,62) eine zentral angeordnete Öffnung (24,42,66) aufweist, die fluchtend zur Lageöffnung der Radnabe (2) ausgerichtet ist.

8. Schienenrad nach Anspruch 7, **dadurch gekennzeichnet, dass** am ihre Öffnung (24) umgrenzenden inneren Rand der Radabdeckung (20,21;40,41;61,62) zwei oder mehr beabstandet zueinander angeordnete, radial vorstehende Zungenabschnitte (19,68) ausgebildet sind, über die die Radabdeckung (20,21;40,41;61,62) gegen den Radkörper (1) wirkt.

9. Schienenrad nach Anspruch 7 oder 8, **dadurch gekennzeichnet, dass** die Radabdeckung (20,21;40,41;61,62) mindestens mit einem Abschnitt ihres der Radnabe (2) zugeordneten, ihre Öffnung (24,66) umgrenzenden inneren Rands federnd elastisch gegen eine Außenumfangsfläche (10,11) der Radnabe (2) abgestützt ist.

10. Schienenrad nach einem der Ansprüche 7 bis 9, **dadurch gekennzeichnet, dass** an einer Außenumfangsfläche (10,11) der Radnabe (2) eine umlaufende Nut (16,17,72,73,97,98) vorgesehen ist, in der die Radabdeckung (20,21;40,41;61,62) mit ihrem ihre zentrale Öffnung (24,42,66) umgrenzenden inneren Rand mindestens abschnittsweise formschlüssig sitzt.

11. Schienenrad nach einem der Ansprüche 5 oder 6 und einem der Ansprüche 7 bis 10, **dadurch gekennzeichnet, dass** die Radabdeckung (20,21;40,41;61,62) zwischen der Innenumfangsfläche (12,13) des Radkranzes (3) und der Außenumfangsfläche (10,11) der Radnabe (2) gespannt ist.

12. Schienenrad nach einem der voranstehenden Ansprüche, **dadurch gekennzeichnet, dass** die Radabdeckung (20,21;40,41;61,62) über mindestens ein zwischen der Radscheibe (4) und der Radabdeckung (20,21;40,41;61,62) angeordnetes elastisches Kopplungselement (30,31,48,63) auf den Radkörper (1) wirkt.

13. Schienenrad nach Anspruch 12, **dadurch gekennzeichnet, dass** das Kopplungselement (63) als Reibelement aus einem Material hergestellt ist, das einen hohen Reibwiderstand in Bezug auf das an der ihm zugeordneten Anlagefläche (64,65) des Radkörpers (1) vorhandenen Material aufweist.

14. Schienenrad nach einem der voranstehenden Ansprüche, **dadurch gekennzeichnet, dass** die Radabdeckung (20,21;40,41;61,62) mindestens in einem Abschnitt mit einem schallabsorbierenden Material beschichtet ist.

15. Schienenrad nach einem der voranstehenden Ansprüche, **dadurch gekennzeichnet, dass** die Radabdeckung (20,21;40,41;61,62) mindestens in einem Abschnitt aus einem schallabsorbierenden Werkstoff besteht.

16. Schienenrad nach einem der voranstehenden Ansprüche, **dadurch gekennzeichnet, dass** die Radabdeckung (20,21;40,41;61,62) und die Radscheibe (4) des Radkörpers (1) einen Raum (32,33,50,51) begrenzen, der mit einem schalldämpfenden Material gefüllt ist.

## Claims

1. Track wheel having a wheel body (1) which comprises a wheel disc (4), a wheel hub (2) arranged centrally in the wheel disc (4) and a wheel rim (3) carried by the wheel disc (4), as well as a wheel cover (20, 21; 40, 41; 61, 62) which is fastened on the track wheel (S1 - S4c), is provided for attenuating the sound emission incurred by the rolling movement of the track wheel (S1 - S4c) during driving, which covers the wheel disc (4) of the wheel body (1) from the surroundings on at least one of its end faces (7, 9) at least in some sections, and is supported on the one hand on an inner region, assigned to the wheel hub (2), of the wheel body (1), and on the other hand on an outer edge region, assigned to the wheel rim (3), of the wheel body (1), **characterised in that** the wheel cover (20, 21; 40, 41; 61, 62) exerts a resiliently elastic pressure force (A, R) against the wheel body (1) in the region of its edge assigned to the wheel rim (3) and/or the wheel hub (2) of the wheel body (1).

2. Track wheel according to claim 1, **characterised in that** the wheel cover (20, 21; 40, 41; 61, 62) is firmly connected to the wheel body (1) in its region assigned to the wheel hub (2), while it acts resiliently elastically on the wheel body (1) with its outer edge (47).

3. Track wheel according to one of the preceding claims, **characterised in that** the wheel cover (20, 21; 40, 41; 61, 62) is formed in the manner of a disc spring.

4. Track wheel according to one of the preceding claims, **characterised in that** two or more radially projecting tongue sections (18) arranged separated from one another, via which the wheel cover (20, 21; 40, 41; 61, 62) acts against the wheel body (1), are formed on the outer edge of the wheel cover (20, 21; 40, 41; 61, 62).

5. Track wheel according to one of the preceding claims, **characterised in that** the wheel cover (20, 21; 40, 41; 61, 62) is supported resiliently elastically with its outer edge (47) against an inner circumferential surface (12, 13) of the wheel rim (3).

6. Track wheel according to claim 5, **characterised in that** a circumferential groove (14, 15, 71, 72), in which the wheel cover (20, 21; 40, 41; 61, 62) is seated with its outer edge at least in some sections with a form fit, is provided on an inner circumferential surface (12, 13) of the wheel rim (3).

7. Track wheel according to one of the preceding claims, **characterised in that** the wheel cover (20, 21; 40, 41; 61, 62) has a centrally arranged opening (24, 42, 60) which is oriented flush with bearing opening of the wheel hub (2).

8. Track wheel according to claim 7, **characterised in that** two or more radially projecting tongue sections (19, 68) arranged separated from one another, via which the wheel cover (20, 21; 40, 41; 61, 62) acts against the wheel body (1), are formed on the inner edge of the wheel cover (20, 21; 40, 41; 61, 62) enclosing its opening (24).

9. Track wheel according to claim 7 or 8, **characterised in that** the wheel cover (20, 21; 40, 41; 61, 62) is supported resiliently elastically against an outer circumferential surface (10, 11) of the wheel hub (2) at least with a section of its inner edge assigned to the wheel hub (2) and enclosing its opening (24, 66).

10. Track wheel according to one of claims 7 to 9, **characterised in that** a circumferential groove (16, 17, 72, 73, 97, 98), in which the wheel cover (20, 21; 40, 41; 61, 62) is seated with its inner edge enclosing its central opening (24, 42, 66) at least in some sections with a form fit, is provided on an outer circumferential surface (10, 11) of the wheel hub (2).

11. Track wheel according to one of claims 5 and 6 and one of claims 7 to 10, **characterised in that** the wheel cover (20, 21; 40, 41; 61, 62) is clamped between the inner circumferential edge (12, 13) of the wheel rim (3) and the outer circumferential edge (10, 11) of the wheel hub (2).

12. Track wheel according to one of the preceding claims, **characterised in that** the wheel cover (20, 21; 40, 41; 61, 62) acts on the wheel body (1) via at least one elastic coupling element (30, 31, 48, 63) arranged between the wheel disc (4) and the wheel cover (20, 21; 40, 41; 61, 62).

13. Track wheel according to claim 12, **characterised in that** the coupling element (63) is produced as a friction element from a material which has a high friction resistance in relation to the material present on the bearing surface (64, 65), assigned to it, of the wheel body (1).

14. Track wheel according to one of the preceding claims, **characterised in that** the wheel cover (20, 21; 40, 41; 61, 62) is coated with a sound-absorbing material at least in one section.

15. Track wheel according to one of the preceding claims, **characterised in that** the wheel cover (20, 21; 40, 41; 61, 62) consists of a sound-absorbing material at least in one section.

16. Track wheel according to one of the preceding claims, **characterised in that** the wheel cover (20, 21; 40, 41; 61, 62) and the wheel disc (4) of the wheel body (1) delimit a space (32, 33, 50, 51) which is filled with a sound-attenuating material.

## Revendications

1. Roue de véhicule ferroviaire, avec un corps de roue (1), qui comprend un disque de roue (4), un moyeu de roue (2), disposé centralement dans le disque de roue (4), et une jante (3), portée par le disque de roue (4), et avec une plaque de couverture de roue (20, 21 ; 40, 41 ; 61, 62) qui, fixée sur la roue de véhicule ferroviaire (S1 - S4c), pour atténuer les émissions sonores produites par le mouvement de la roue de véhicule ferroviaire (S1 - S4c) pendant la marche, recouvre le disque de roue (4) du corps de roue (1), au moins par sections, sur au moins l'une de ses faces frontales (7, 9), par rapport à l'environnement et, ce faisant, prend appui, d'une part, sur une zone intérieure du corps de roue (1) associée au moyeu de roue (2), et, d'autre part, sur une zone extérieure du corps de roue (1) associée à la jante (3),
**caractérisée en ce que**, dans la région de son bord associé à la jante (3) et / ou au moyeu de roue (2) du corps de roue (1), la plaque de couverture de roue (20, 21 ; 40, 41 ; 61, 62) exerce contre le corps de roue (1) une force de pression élastique faisant ressort (A, R).

2. Roue de véhicule ferroviaire selon la revendication 1,
**caractérisée en ce que** la plaque de couverture de roue (20, 21 ; 40, 41 ; 61, 62), dans sa région associée au moyeu de roue (2), est reliée fixement au corps de roue (1), tandis qu'elle exerce, avec son bord extérieur (47), une force de pression élastique faisant ressort sur le corps de roue (1).

3. Roue de véhicule ferroviaire selon l'une des revendications précédentes,
**caractérisée en ce que** la plaque de couverture de roue (20, 21 ; 40, 41 ; 61, 62) est réalisée en forme de ressort à disques.

4. Roue de véhicule ferroviaire selon l'une des revendications précédentes,
**caractérisée en ce que**, sur le bord extérieur de la plaque de couverture de roue (20, 21 ; 40, 41 ; 61, 62) sont formées deux ou plusieurs sections de languettes (18) distancées les unes des autres, en saillie radiale, par l'intermédiaire desquelles la plaque de couverture de roue (20, 21 ; 40, 41 ; 61, 62) agit contre le corps de roue (1).

5. Roue de véhicule ferroviaire selon l'une des revendications précédentes,
**caractérisée en ce que** la plaque de couverture de roue (20, 21 ; 40, 41 ; 61, 62), avec son bord extérieur (47), prend élastiquement appui contre une surface périphérique, intérieure (12, 13) de la jante (3), en faisant ressort.

6. Roue de véhicule ferroviaire selon la revendication 5.
**caractérisée en ce que**, sur une surface périphérique, intérieure (12, 13) de la jante (3), est prévue une rainure continue (14, 15, 71, 72) dans laquelle la plaque de couverture de roue (20, 21 ; 40, 41 ; 61, 62) s'emboîte, au moins par sections, avec son bord extérieur.

7. Roue de véhicule ferroviaire selon l'une des revendications précédentes,
**caractérisée en ce que** la plaque de couverture de roue (20, 21 ; 40, 41 ; 61, 62) est dotée d'une ouverture centrale (24, 42, 66) qui est en alignement avec l'ouverture du moyeu de roue (2).

8. Roue de véhicule ferroviaire selon la revendication 7,
**caractérisée en ce que**, sur le bord intérieur de la plaque de couverture de roue (20, 21 ; 40, 41 ; 61, 62), délimitant son ouverture (24), sont formées deux ou plusieurs sections de languettes (19, 68) en saillie radiale, distancées les unes des autres, par l'intermédiaire desquelles la plaque de couverture de roue (20, 21 ; 40, 41 ; 61, 62) agit contre le corps de roue (1).

9. Roue de véhicule ferroviaire selon revendication 7 ou 8,
**caractérisée en ce que** la plaque de couverture de roue (20, 21 ; 40, 41 ; 61, 62), avec au moins une section de son bord intérieur, associé au moyeu de roue (2) et délimitant son ouverture (24, 66), s'appuie élastiquement contre une surface périphérique, extérieure (10, 11) du moyeu (2), en faisant ressort.

10. Roue de véhicule ferroviaire selon l'une des revendications 7 à 9,
**caractérisée en ce que**, sur une surface périphérique, extérieure (10, 11) du moyeu de roue (2), est prévue une rainure continue (16, 17, 72, 73, 97, 98) dans laquelle la plaque de couverture de roue (20, 21 ; 40, 41 ; 61, 62) s'emboîte, au moins par sections, avec son bord intérieur, délimitant son ouverture centrale (24, 42, 66)

11. Roue de véhicule ferroviaire selon l'une des revendications 5 ou 6 et l'une des revendications 7 à 10,
**caractérisée en ce que** la plaque de couverture de roue (20, 21 ; 40, 41 ; 61, 62) est serrée entre la face périphérique, intérieure (12, 13) de la jante (3) et la face périphérique, extérieure (10, 11) du moyeu de roue (2).

12. Roue de véhicule ferroviaire selon la l'une des revendications précédentes
**caractérisée en ce que** la plaque de couverture de roue (20, 21 ; 40, 41 ; 61, 62) agit sur le corps de roue (1) par l'intermédiaire d'au moins un élément de couplage élastique (30, 31, 48, 63) qui est disposé entre le disque de roue (4) et la plaque de couverture de roue (20, 21 ; 40, 41 ; 61, 62).

13. Roue de véhicule ferroviaire selon la revendication 12,
**caractérisée en ce que** l'élément de couplage (63) est fabriqué, en tant qu'élément de friction, en matière dotée d'une haute résistance à la friction par rapport à la matière présente sur la surface d'appui (64, 65) du corps de roue (1) qui lui est associée.

14. Roue de véhicule ferroviaire selon l'une des revendications précédentes,
**caractérisée en ce que** la plaque de couverture de roue (20, 21 ; 40, 41 ; 61, 62) est revêtue, au moins dans une section, d'une matière absorbant les bruits.

15. Roue de véhicule ferroviaire selon l'une des revendications précédentes,
**caractérisée en ce que** la plaque de couverture de roue (20, 21 ; 40, 41 ; 61, 62) consiste, au moins dans une section, en un matériau absorbant les bruits.

16. Roue de véhicule ferroviaire selon l'une des revendications précédentes,
**caractérisée en ce que** la plaque de couverture de roue (20, 21 ; 40, 41 ; 61, 62) et le disque de roue (4) du corps de roue (1) limitent une chambre (32, 33, 50, 51) qui est remplie avec une matière amortissant le bruit.
